# EUROPÄISCHE PATENTSCHRIFT

(11) **EP 1 357 655 B1**
(45) Veröffentlichungstag und Bekanntmachung des Hinweises auf die Patenterteilung: **01.02.2006**
(21) Anmeldenummer: 03009087.2
(22) Anmeldetag: 19.04.2003
(51) Int. Cl.: H02G 15/115, H05B 3/06, H05B 3/56

(54) **Einrichtung zur Verbindung elektrischer Leiter**
Device for connecting electrical conductors
Dispositif de connexion de conducteurs électriques

(30) Priorität: 27.04.2002 DE 10219019
(43) Veröffentlichungstag der Anmeldung: 29.10.2003
(73) Patentinhaber: Bartec GmbH, 97980 Bad Mergentheim (DE)
(72) Erfinder: Barlian, Reinhold, 97980 Bad Mergentheim (DE); Michelbach, Thomas, 97922 Lauda-Königshofen (DE); Lösch, Hans-Martin, 97084 Würzburg (DE)

(56) Entgegenhaltungen:
- WO-A-96/13080
- DE-A- 4 108 901
- DE-A- 19 751 844
- DE-C- 3 500 232
- US-A- 3 593 002

## Beschreibung

Die Erfindung betrifft eine Einrichtung zur Verbindung elektrischer Kabel.

Die DE 197 51 844 A1 offenbart eine Einrichtung zum Anschließen und Verbinden einer Leitung, umfassend eine rohrförmige Muffe mit einem Verbindungsgehäuse, eine Kontaktbuchse, eine in das Verbindungsgehäuse einschiebbare Isolierhülse für ein mit einem Schirmgeflecht versehenes Kabel und eine in der Isolierhülse gelagerte Kontaktfeder, die mit der Kontaktbuchse und dem Schirmgeflecht über einen Verbindungsbolzen kontaktierbar ist.

Die DE 41 08 901 A1 offenbart eine Einrichtung für eine elektrische Leitung, umfassend ein rohrförmiges Gehäuse, einen in das Gehäuse einsetzbaren Verbindungsteil, der einen Isolierkörper und Schraubklemmen für die Befestigung der Leiterenden aufweist, einen in den Isolierkörper einsetzbaren Kontaktstift, der in einen Gewindeeinsatz kontaktierend eingreift, und eine Gewindehülse, mittels der ein Metallgeflecht der Leitung im Gewindeeinsatz kontaktierend festklemmbar ist.

Die Aufgabe der Erfindung besteht darin, eine kompakt kleinbauende Leiterverbindungseinrichtung zu schaffen, bei der mit einfachen Mitteln eine von Hand schnell und sicher durchführbare Schutzleiterkontaktierung mit hoher Funktionstüchtigkeit erzielt wird.

Diese Aufgabe wird erfindungsgemäß durch die Merkmale des Anspruchs 1 gelöst.

Bevorzugte Ausgestaltungen und Weiterbildungen der Erfindung sind durch die Merkmale der Unteransprüche gekennzeichnet.

Weitere Vorteile und wesentliche Einzelheiten der Erfindung sind der nachfolgenden Beschreibung und der Zeichnung zu entnehmen, die in schematischer Darstellung eine bevorzugte Ausführungsform als Beispiel zeigt. Es stellen dar:
- FIG. 1: eine erfindungsgemäße Einrichtung in einer vergrößerten Ansicht, teilweise geschnitten,
- FIG. 2: eine nochmals vergrößerte Teilansicht der Einrichtung gemäß FIG. 1,
- FIG. 3: die Einrichtung der FIG. 2 in einer Ansicht gemäß dem Schnitt A - A,

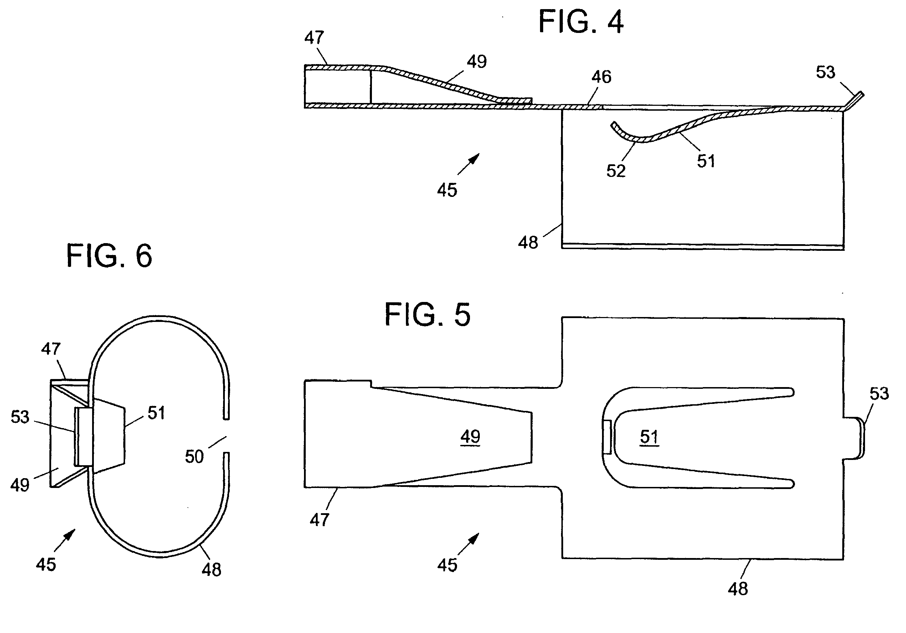

- FIG. 4: eine Kontaktfeder der FIG. 2 in einer geschnittenen Seitenansicht,
- FIG. 5: die Kontaktfeder der FIG. 4 in einer Draufsicht,
- FIG. 6: die Kontaktfeder der FIG. 5 mit Sicht auf die rechte Stirnseite,

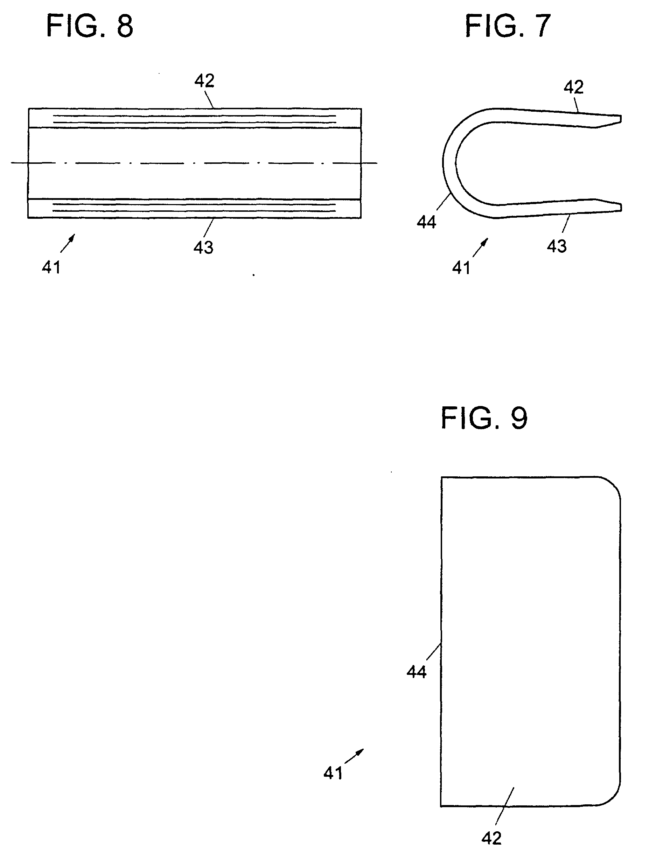

- FIG. 7: das Klemmblech der FIG. 1 und 2 in einer Stirnseitenansicht,
- FIG. 8: das Klemmblech der FIG. 7 mit Sicht auf die rechte Schmalseite und
- FIG. 9: das Klemmblech der FIG. 7 in einer Draufsicht.

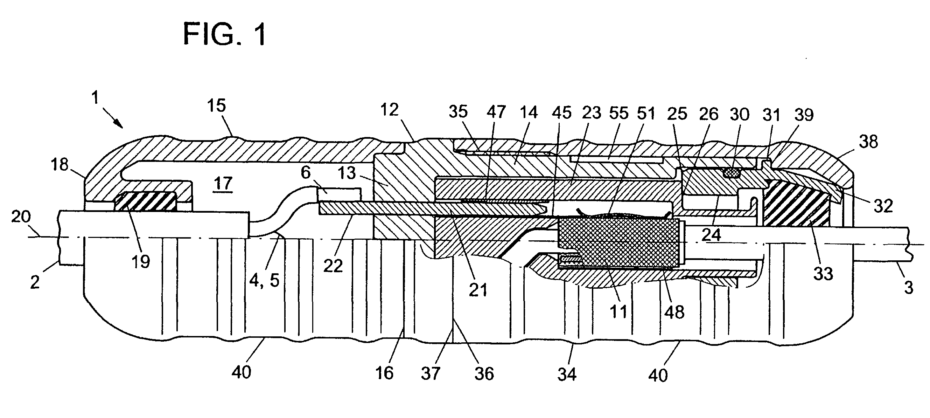

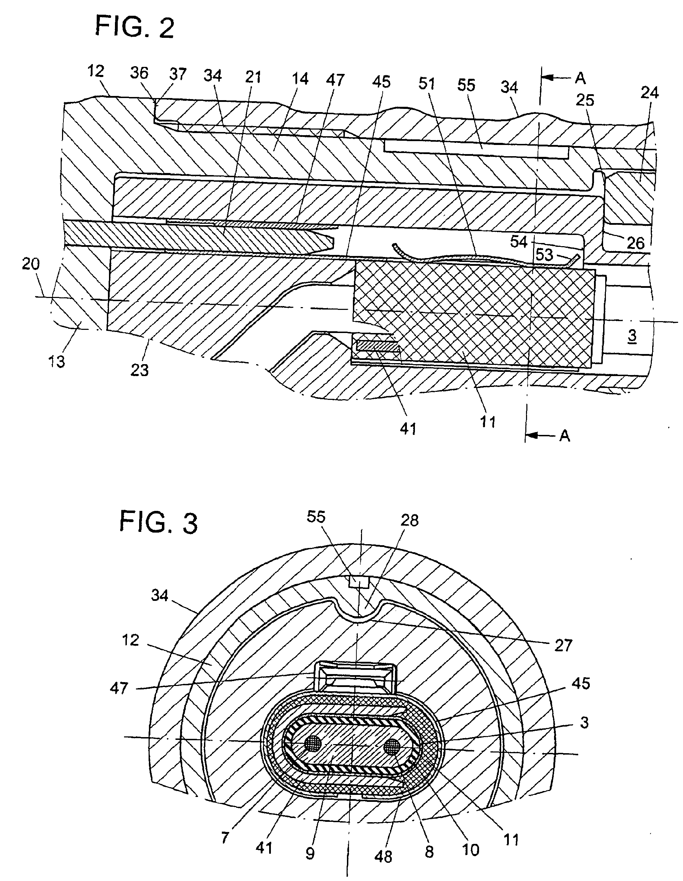

Die in den FIG. 1 bis 3 des vorliegenden Ausführungsbeispiels dargestellte Verbindungseinrichtung ist als etwa rohrförmige Muffe 1, so genannte Anschlussmuffe, ausgeführt, die auf der einen (linken) Seite ein elektrisches Anschlusskabel 2 und auf der anderen (rechten) Seite ein elektrisches Heizkabel 3 aufweist. Das Anschlusskabel 2 kann eine im Querschnitt kreisrunde Schlauchleitung sein, die bevorzugt zwei Elektroleiter 4, 5 und einen elektrischen Schutzleiter 6 besitzt.

Das Heizkabel 3 weist vorzugsweise einen ovalen Querschnitt auf und besitzt zwei auf Abstand parallel zueinander angeordnete Heizleiter 7, 8, die in einer halbleitenden Kunststoffhülle 9 eingebettet sind, eine Isolierung 10 und ein als elektrischer Schutzleiter ausgeführtes Schirmgeflecht 11.

Die Muffe 1 weist ein etwa topfförmiges Verbindungsgehäuse 12 auf, das eine Bodenwand 13 und eine Ringwandung 14 besitzt. An der Bodenwand 13 ist eine Gehäusekappe 15 angeordnet, die zweckmäßig durch eine werksseitige Ultraschallschweißung 16 mit der Bodenwand 13 des Verbindungsgehäuses 12 dicht verbunden ist und einen Anschlussraum 17 mitbegrenzt. In der der Bodenwand 13 gegenüberliegenden Stirnwand 18 der Gehäusekappe 15 ist ein Dichtring 19 angeordnet, durch den das Anschlusskabel 2 in den Anschlussraum 17 hineingeführt ist. Das Anschlusskabel 2 ist von dem Dichtring 19 eng umschlossen, so dass der Anschlussraum 17 gegen äußere Einflüsse dicht abgeschirmt ist.

In der Bodenwand 13 des Verbindungsgehäuses 12 ist parallel zur Längsachse 20 der Muffe 1 eine Kontaktzunge 21 angeordnet, die die Bodenwand 13 in Richtung zur Öffnungsseite des Verbindungsgehäuses 12 hin durchsetzt und einen in den Anschlussraum 17 hineinragenden Endteil 22 aufweist. An diesem Endteil 22 ist der Schutzleiter 6 vorzugsweise mittels einer Punktschweißung elektrisch kontaktiert.

In dem Verbindungsgehäuse 12 befinden sich eine Isolierhülse 23 und eine Klemmhülse 24, die von der der Bodenwand 13 gegenüberliegenden Öffnungsseite her in das Verbindungsgehäuse 12 einschiebbar sind, wobei eine Stirnfläche 25 der Klemmhülse 24 gegen eine Anschlagfläche 26 der Isolierhülse 23 wirkt. Die Isolierhülse 23 besitzt eine sich in axialer Längsrichtung erstreckende Nut 27, in die ein Steg 28 des Verbindungsgehäuses 12 eingreift, so dass die Isolierhülse 23 in dem Verbindungsgehäuse 12 verdrehsicher gelagert ist.

Die Klemmhülse 24 weist eine Ringnut auf, in der eine Ringdichtung 30 gelagert ist, der an der Innenseite der Ringwandung 14 des Verbindungsgehäuses 12 dicht anliegt. Außerdem besitzt die Klemmhülse 24 einen vor der Öffnungsseite des Verbindungsgehäuses 12 befindlichen Ringsteg 31 und federelastische Finger 32, die eine Dichtung 33 umschließen. Durch diese Dichtung 33 ist das das Schirmgeflecht 11 aufweisende Heizkabel 3 hindurchgeführt, wobei die Dichtung 33 das Heizkabel 3 dicht umschließt.

Die Muffe 1 weist zudem eine Gewindekappe 34 auf, die ein Innengewinde besitzt, das in ein Außengewinde des Verbindungsgehäuses 12 eingreift und über das so gebildete Schraubgewinde 35 mit dem Verbindungsgehäuse 12 lösbar verbunden ist. In der aufgeschraubten Endposition liegt die Stirnseite 36 der Gewindekappe 34 an einer Begrenzungsfläche 37 des Verbindungsgehäuses 12 an.

An dem anderen Ende weist die Gewindekappe 34 einen sich trichterförmig verengenden Bund 38 auf, der beim Aufschrauben der Gewindekappe 34 die Finger 32 der Klemmhülse 24 radial gegen die Dichtung 33 drückt. Dabei drückt die Gewindekappe 34 mit einer schulterartigen Druckfläche 39 gegen den Ringsteg 31 der Klemmhülse 24. Außerdem ist ersichtlich, dass sowohl die Gehäusekappe 15 als auch die Gewindekappe 34 Griffmulden 40 aufweisen können, so dass die Muffe 1 bei der Montage sicher von Hand erfasst und verschraubt werden kann.

Wie der Zeichnung weiterhin zu entnehmen ist, befindet sich innerhalb der Isolierhülse 23 auf dem Heizkabel 3 ein Klemmblech 41, das einen U-förmigen Querschnitt aufweist und somit zwei Seitenwände 42, 43 und eine Grundwand 44 besitzt. Das U-förmige Klemmblech 41, das bei der Montage auf das Heizkabel 3 quer zu dessen Längsrichtung aufgeschoben wird, ist dem Querschnitt des Heizkabels 3 angepasst, so dass die Seitenwände 42, 43 und die Grundwand 44 das Heizkabel 3 außen eng umschließen.

In der Isolierhülse 23 ist eine aus einem dünnen Blech hergestellte Kontaktfeder 45 gelagert, die einen Grundsteg 46, einen Buchsenteil 47 und eine Kontakthülse 48 aufweist. Am Buchsenteil 47 ist eine Federzunge 49 angeformt, die mit ihrer Federkraft in Richtung gegen den Grundsteg 46 wirkt. Der Buchsenteil 47 mit der Federzunge 49 ist so gestaltet, dass er die an der Bodenwand 13 des Verbindungsgehäuses 12 angeordnete und in die Isolierhülse 23 hineinragende Kontaktzunge 21 eng umschließt, wobei die Federzunge 49 verstärkt gegen die Kontaktzunge 21 drückt, so dass eine einwandfreie und dauerhafte elektrische Kontaktierung gewährleistet ist. Die Kontakthülse 48 weist einen etwa C-förmigen Querschnitt auf und ist so am Grundsteg 46 angeformt, dass sich die als Freischnitt 50 ausgeführte Öffnungsseite des C an der dem Grundsteg 46 gegenüberliegenden Seite befindet. Der Kontakthülse 48 ist ein Kontaktfederbügel 51 zugehörig, der am Grundsteg 46 ausgebildet ist, derart, dass der Kontaktfederbügel 51 aus der Ebene des Grundstegs 46 an drei Seiten freigeschitten und schräg in den Raum der Kontakthülse 48 hineingebogen ist, wobei das freie Ende des Kontaktfederbügels 51 eine Rundung 52 aufweisen kann. Im montierten Zustand umschließt die Kontakthülse 48 eng das über das Klemmblech 41 zurückgestülpte Schirmgeflecht 11, so dass auch hier eine einwandfreie, dauerhafte elektrische Kontaktierung gegeben ist, die durch die stete Anpressung des Kontaktfederbügels 51 gegen das Schirmgeflecht 11 intensiviert wird. Damit die Kontaktfeder 45 auch bei noch nicht angeschlossenen Kabeln 2, 3 unverlierbar in der Isolierhülse 23 gehalten ist, kann an dem dem Buchsenteil 47 abgewandten Ende des Grundstegs 46 eine schräg abstrebende Sicherungslasche 53 angeformt sein, die gegen eine Schulter 54 der Isolierhülse 23 anlegbar ist, so dass ein unbeabsichtigtes Herausgleiten aus der Isolierhülse 23 verhindert ist.

Zudem kann an der Außenseite des Verbindungsgehäuses 12 eine vorzugsweise als Nut ausgebildete Markierung 55 vorgesehen sein, die sich über dem in die Nut 27 eingreifenden Steg 28 befinden kann, so dass eine Lageerkennung für das Einschieben der Isolierhülse 23 beim Zusammenbau der Muffe 1 gegeben ist.

Für die Montage des Heizkabels 3 wird das U-förmige Klemmblech 41 seitlich auf das Heizkabel 3 aufgeschoben. Dann wird der vordere Teil des Schirmgeflechts 11 nach hinten umgelegt, so dass das Schirmgeflecht 11 das Klemmblech 41 überdeckt. Beim Einführen in die lsolierhülse 23 gelangt dieser zurückgeklappte Teil des Schirmgeflechts 11 in die Kontakthülse 48. Beim Einschieben der Isolierhülse 23 in das Verbindungsgehäuse 12 dringt die Kontaktzunge 21, die an ihrem vorderen Ende Einführschrägen aufweist, in den Buchsenteil 47 der Kontaktfeder 45 ein, so dass die elektrische Schutzleiterkontaktierung hergestellt ist. Das Hineinschieben der Isolierhülse 23 in das Verbindungsgehäuse 12 erfolgt mit Hilfe der Gewindekappe 34, die beim Zusammenschrauben der Muffe 1 mit ihrer Druckfläche 39 gegen den Ringsteg 31 der Klemmhülse 24 wirkt und letztere gemeinsam mit der Isolierhülse 23 in das Verbindungsgehäuse 12 schiebt.

Ein Vorteil der erfindungsgemäßen Einrichtung besteht darin, dass nach dem Einschieben des Heizkabels 3 von Hand in die Kontaktfeder 45 der Isolierhülse 23 auf Grund der beschriebenen Konstruktion die Steckverbindung zwischen der Kontaktzunge 21 und dem Buchsenteil 47 somit im Wesentlichen automatisch elektrisch geschlossen wird, indem beim Zudrehen der Gewindekappe 34 die Klemmhülse 24 und die Isolierhülse 23 in das Verbindungsgehäuse 12 eingeschoben werden. Darüber hinaus weist die Einrichtung die Vorteile auf, dass die Schutzleitersteckverbindung äußerst kleinbauend ausgeführt werden kann, so dass die Einrichtung insgesamt klein und kompakt ist, dass eine dauerhaft sichere elektrische Kontaktierung des Heizkabel-Schutzleitergeflechts 11 durch das Klemmblech 41 und die Kontaktfeder 45 gegeben ist und dass die Schutzleitersteckverbindung für das Heizkabel 3 im Sinne des genormten Explosionsschutzes in erhöhter Sicherheit "e" ausgebildet ist.

## Patentansprüche

1. Einrichtung zur Verbindung elektrischer Kabel (2, 3), umfassend eine rohrförmige Muffe (1) mit einem Verbindungsgehäuse (12), eine Kontaktzunge (21), an die ein Schutzleiter (6) des einen Kabels (2) anschließbar ist, eine in das Verbindungsgehäuse (12) einschiebbare Isolierhülse (23) für das mit einem Schirmgeflecht (11) versehene andere Kabel (3), auf das ein Klemmblech (41) aufbringbar ist, das von dem Schirmgeflecht (11) überdeckt ist, und eine in der Isolierhülse (23) gelagerte Kontaktfeder (45), die einen die Kontaktzunge (21) umgreifenden Buchsenteil (47) und eine das über das Klemmblech (41) gestülpte Schirmgeflecht (11) eng umgreifende Kontakthülse (48) aufweist.

2. Einrichtung nach vorstehendem Anspruch, **dadurch gekennzeichnet, dass** die Kontaktzunge (21) in einer Bodenwand (13) des Verbindungsgehäuses (12) angeordnet ist und einen aus der Bodenwand (13) herausragenden Endteil (22) aufweist, an dem der Schutzleiter (6) des einen Kabels (2) elektrisch kontaktierbar ist.

3. Einrichtung nach einem der vorstehenden Ansprüche, **dadurch gekennzeichnet, dass** das Klemmblech (41) mit zwei Seitenwänden (42, 43) und einer diese verbindenden Grundwand (44) einen etwa U-förmigen Querschnitt aufweist.

4. Einrichtung nach einem der vorstehenden Ansprüche, **dadurch gekennzeichnet, dass** das Klemmblech (41) das Schirmgeflechtkabel (3) eng umschließt.

5. Einrichtung nach einem der vorstehenden Ansprüche, **dadurch gekennzeichnet, dass** das Klemmblech (41) bei der Montage quer zur Längsrichtung des Heizkabels (3) auf letzteres aufschiebbar ist.

6. Einrichtung nach einem der vorstehenden Ansprüche, **dadurch gekennzeichnet, dass** der Buchsenteil (47) an einem Grundsteg (46) der Kontaktfeder (45) angeordnet ist.

7. Einrichtung nach Anspruch 6, **dadurch gekennzeichnet, dass** der Buchsenteil (47) der Kontaktfeder (45) eine gegen den Grundsteg (46) gerichtete Federzunge (49) aufweist.

8. Einrichtung nach Anspruch 6, **dadurch gekennzeichnet, dass** die Kontakthülse (48) an dem Grundsteg (46) der Kontaktfeder (45) angeordnet ist und einen gegen das Schirmgeflecht (11) vorgespannten Kontaktfederbügef (51) aufweist.

9. Einrichtung nach Anspruch 8, **dadurch gekennzeichnet, dass** der Kontaktfederbügel (51) an dem Grundsteg (46) angeordnet und an drei Seiten freigeschnitten ist.

10. Einrichtung nach Anspruch 8, **dadurch gekennzeichnet, dass** die Kontakthülse (48) der Kontaktfeder (45) an der dem Grundsteg (46) gegenüberliegenden Seite einen Freischnitt (50) aufweist.

11. Einrichtung nach einem der vorstehenden Ansprüche, **dadurch gekennzeichnet, dass** die Kontaktfeder (45) eine am Grundsteg (46) angeordnete und gegen eine Schulter (54) der Isolierhülse (23) anschlagbare Sicherungslasche (53) aufweist.

12. Einrichtung nach einem der vorstehenden Ansprüche, **dadurch gekennzeichnet, dass** an der Bodenwand (13) des Verbindungsgehäuses (12) eine einen Anschlussraum (17) mitbegrenzende Gehäusekappe (15) angeordnet ist.

13. Einrichtung nach Anspruch 12, **dadurch gekennzeichnet, dass** die Gehäusekappe (15) mittels einer Ultraschallschweißung (16) mit dem Verbindungsgehäuse (12) verbunden ist.

14. Einrichtung nach einem der Ansprüche 12 oder 13, **dadurch gekennzeichnet, dass** das den Schutzleiter (6) aufweisende Kabel (2) durch eine Stimwand (18) der Gehäusekappe (15) in den Anschlussraum (17) hineingeführbar ist und von einem in der Wand gelagerten Dichtring (19) umschliessbar ist.

15. Einrichtung nach einem der vorstehenden Ansprüche, **dadurch gekennzeichnet, dass** das Verbindungsgehäuse (12) einen in eine Nut (27) der Isolierhülse (23) eingreifenden Steg (28) aufweist.

16. Einrichtung nach einem der vorstehenden Ansprüche, **dadurch gekennzeichnet, dass** der Isolierhülse (23) an der der Bodenwand (13) des Verbindungsgehäuses (12) abgewandten Seite eine federelastische Finger (32) aufweisende Klemmhülse (24) zugeordnet ist, die eine Dichtung (33) umschließt, durch die das das Schirmgeflecht (11) aufweisende Kabel (3) hindurchgeführbar ist.

17. Einrichtung nach Anspruch 16, **dadurch gekennzeichnet, dass** die Klemmhülse (24) eine Ringnut aufweist, in der eine an der Innenseite des Verbindungsgehäuses (12) anliegende Ringdichtung (30) gelagert ist.

18. Einrichtung nach einem der vorstehenden Ansprüche, **dadurch gekennzeichnet, dass** die Muffe (1) eine das Verbindungsgehäuse (12) übergreifende Gewindekappe (34) aufweist, die über ein Schraubgewinde (35) mit dem Verbindungsgehäuse (12) verbindbar ist.

19. Einrichtung nach Anspruch 18, **dadurch gekennzeichnet, dass** die Gewindekappe (34) einen sich verengenden Bund (38) aufweist, der gegen die Finger (32) der Klemmhülse (24) konisch andrückbar ist.

20. Einrichtung nach einem der Ansprüche 18 oder 19, **dadurch gekennzeichnet, dass** die Gewindekappe (34) eine Druckfläche (39) aufweist, die gegen einen Ringsteg (31) der Klemmhülse (24) andrückbar ist.

21. Einrichtung nach einem der Ansprüche 18 bis 20, **dadurch gekennzeichnet, dass** die dem Bund (38) abgewandte Stirnseite (36) der Gewindekappe (34) an einer Begrenzungsfläche (37) des Verbindungsgehäuses (12) anliegt.

22. Einrichtung nach einem der Ansprüche 18 bis 21, **dadurch gekennzeichnet, dass** die Gehäusekappe (15) und/oder die Gewindekappe (34) der Muffe (1) außen mindestens eine Griffmulde (40) aufweist.

## Claims

1. Device for connecting electric cables (2, 3), incorporating a tubular sleeve (1) with a connecting housing (12), a contact tab (21) to which a protective conductor (6) of a cable (2) can be connected, an isolating sleeve (23) to be inserted into the connecting housing (12), for the other cable (3) equipped with a shield mesh (11), onto which a clip sheet (41) can be affixed, the same being covered by the shield mesh (11), and a contact spring (45) bearingly positioned within the isolating sleeve (23), which incorporates a bush (47) enclosing the contact tab (21) and a contact sleeve (48) tightly enclosing a shield mesh (11) affixed over the clip sheet (41).

2. Device according to Claim 1, **characterised in that** the contact tab (21) is located in a bottom wall (13) of the connecting housing (12) and incorporates an end part (22) protruding from the bottom wall (13), where the protective conductor (6) of one cable (2) can be contacted.

3. Device according to one of the preceding Claims, **characterised in that** the clip sheet (41) incorporates two side walls (42, 43), and that one of the connecting base walls (44) incorporates an approximately U-shaped cross-section.

4. Device according to one of the preceding Claims, **characterised in that** the clip sheet (41) tightly encloses the shield mesh cable (3).

5. Device according to one of the preceding Claims, **characterised in that** the clip sheet (41) can be pushed onto the heater cable (3) diagonally in relation to the longitudinal expansion of the same during assembly.

6. Device according to one of the preceding Claims, **characterised in that** the bush (47) is located at a base bridge (46) of the contact spring (45).

7. Device according to Claim 6, **characterised in that** the bush (47) of the contact spring (45) incorporates a spring tab (49) directed against the base bridge (46).

8. Device according to Claim 6, **characterised in that** the contact sleeve (48) is located at the base bridge (46) of the contact spring (45) and incorporates a contact spring bow (51) pre-tensioned against the shield mesh (11).

9. Device according to Claim 8, **characterised in that** the contact spring bow (51) is located at the base bridge (46) and cut out on three sides.

10. Device according to Claim 8, **characterised in that** the contact sleeve (48) of the contact spring (45) incorporates a cut-out (50) on the side opposite the base bridge (46).

11. Device according to one of the preceding Claims, **characterised in that** the contact spring (45) incorporates a securing tab (53) located at the base bridge (46) and applicable against a shoulder (54) of the isolating sleeve (23).

12. Device according to one of the preceding Claims, **characterised in that** a housing cap (15) defining an adjacent chamber (17) is located at the bottom wall (13) of the connecting housing (12).

13. Device according to Claim 12, **characterised in that** the housing cap (15) is connected with the connecting housing (12) by means of an ultrasound weld (16).

14. Device according to one of the Claims 12 or 13, **characterised in that** the cable (2) incorporating the protective conductor (6) can be routed through a facing wall (18) of the housing cap (15) into the adjacent chamber (17) and can be enclosed by a sealing ring (19) positioned within the wall.

15. Device according to one of the preceding Claims, **characterised in that** the connecting housing (12) incorporates a bridge (28) engaging a groove (27) of the isolating sleeve (23).

16. Device according to one of the preceding Claims, **characterised in that** a clip sleeve (24) with an elastic finger (32) is allocated to the isolating sleeve (23) on the side facing away from the bottom wall (13) of the connecting housing (12), the same enclosing a seal (33) through which the cable (3) incorporating the shield mesh (11) can be routed.

17. Device according to Claim 16, **characterised in that** the clip sleeve (24) incorporates an annular groove in which an annular seal (30) abutting against the inside of the connecting housing (12) is bearingly positioned.

18. Device according to one of the preceding Claims, **characterised in that** the sleeve (1) incorporates a threaded cap (34) straddling the connecting housing (12), which can be connected with the connecting housing (12) by means of a thread (35).

19. Device according to Claim 18, **characterised in that** the threaded cap (34) incorporates a tapered band (38) which can be conically pressed against the finger (32) of the clip sleeve (24).

20. Device according to one of the Claims 18 or 19, **characterised in that** the threaded cap (34) incorporates a pressure surface (39) which can be pressed against an annular bridge (31) of the clip sleeve (24).

21. Device according to one of the Claims 18 to 20, **characterised in that** the facing side (36) of the threaded cap (34) facing away from the band (38) abuts against a limiting surface (37) of the connecting housing (12).

22. Device according to one of the Claims 18 to 21, **characterised in that** the housing cap (15) and/or the threaded cap (34) of the sleeve (1) incorporates at least one grip recess (40) on the outside.

## Revendications

1. Installation pour relier des câbles électriques (2, 3), comportant un coupleur (1) tubulaire muni d'un boîtier de liaison (12), une lame de contact (21) à laquelle peut être raccordé un conducteur de protection (6) d'un des câbles (2), un fourreau isolant (23) susceptible d'être introduite dans le boîtier de liaison (12) et destiné à l'autre câble (3) muni d'un treillis de blindage (11) et sur lequel peut être appliquée une tôle de serrage (41) recouverte par le treillis de blindage (11), et un ressort de contact (45) monté dans le fourreau isolant (23) et muni d'une pièce femelle (47) qui entoure la lame de contact (21) et d'un fourreau de contact (48) qui entoure étroitement le treillis de blindage (11) embouti sur la tôle de serrage (41).

2. Installation selon la revendication précédente,
**caractérisée en ce que**
la lame de contact (21) est placée dans une paroi de fond (13) du boîtier de liaison (12) et comporte une pièce terminale (22) qui dépasse de la paroi de fond (13) et sur laquelle peut être établi le contact électrique du conducteur de protection (6) d'un des câbles (2).

3. Installation selon l'une des revendications précédentes,
**caractérisée en ce que**
la tôle de serrage (41), munie de deux parois latérales (42, 43) et d'une paroi de base (44) qui les relie, a une section transversale approximativement en U.

4. Installation selon l'une des revendications précédentes,
**caractérisée en ce que**
la tôle de serrage (41) entoure étroitement le câble à treillis de blindage (3).

5. Installation selon l'une des revendications précédentes,
**caractérisée en ce que**
la tôle de serrage (41) peut être poussée sur le câble chauffant (3) transversalement à sa direction longitudinale lors du montage.

6. Installation selon l'une des revendications précédentes,
**caractérisée en ce que**
la pièce femelle (47) est placée sur une nervure de base (46) du ressort de contact (45).

7. Installation selon la revendication 6,
**caractérisée en ce que**
la pièce femelle (47) du ressort de contact (45) comporte une lame élastique (49) orientée vers la nervure de base (46).

8. Installation selon la revendication 6,
**caractérisée en ce que**
le fourreau de contact (48) est placé sur la nervure de base (46) du ressort de contact (45) et comporte un étrier de ressort de contact (51) précontraint contre le treillis de blindage (11).

9. Installation selon la revendication 8,
**caractérisée en ce que**
l'étrier de ressort de contact (51) est placé sur la nervure de base (46) et découpé sur trois côtés.

10. Installation selon la revendication 8,
**caractérisée en ce que**
la cosse de contact (48) du ressort de contact (45) présente une découpe (50) sur le côté opposé à la nervure de base (46).

11. Installation selon l'une des revendications précédentes,
**caractérisée en ce que**
le ressort de contact (45) comporte un collier de maintien (53) placé sur la nervure de base (46) et susceptible d'être appliqué contre un épaulement (54) du fourreau isolant (23).

12. Installation selon l'une des revendications précédentes,
**caractérisée en ce que**
un capuchon de boîtier (15) qui délimite une chambre de raccordement (17) est placé sur la paroi de fond (13) du boîtier de liaison (12).

13. Installation selon la revendication 12,
**caractérisée en ce que**
le capuchon de boîtier (15) est relié au boîtier de liaison (12) par une soudure aux ultrasons (16).

14. Installation selon l'une des revendications 12 ou 13,
**caractérisée en ce que**
le câble (2) muni du conducteur de protection (6) peut être inséré dans la chambre de raccordement (17) par une paroi frontale (18) du capuchon de boîtier (15) et entouré par une bague d'étanchéité (19) montée dans la paroi.

15. Installation selon l'une des revendications précédentes,
**caractérisée en ce que**
le boîtier de liaison (12) présente une nervure (28) qui pénètre dans une rainure (27) de la cosse isolante (23).

16. Installation selon l'une des revendications précédentes,
**caractérisée en ce que**
une cosse de contact (24) munie de doigts (32) élastiques est associée au fourreau isolant (23) à l'opposé de la paroi de fond (13) du boîtier de liaison (12) et entoure une garniture d'étanchéité (33) à travers laquelle est passé le câble (3) muni du treillis de blindage (11).

17. Installation selon la revendication 16,
**caractérisée en ce que**
la cosse de contact (24) présente une rainure annulaire dans laquelle est montée une garniture (30) qui s'applique sur le côté intérieur du boîtier de liaison (12).

18. Installation selon l'une des revendications précédentes,
**caractérisée en ce que**
le coupleur tubulaire (1) comporte un capuchon fileté (34) qui recouvre le boîtier de liaison (12) auquel il peut être relié par l'intermédiaire d'un filetage de vis (35).

19. Installation selon la revendication 18,
**caractérisée en ce que**
le capuchon fileté (34) comporte un collet (38) qui se rétrécit et peut être poussé contre les doigts (32) de la cosse de contact (24).

20. Installation selon l'une des revendications 18 ou 19,
**caractérisée en ce que**
le capuchon fileté (34) comporte une surface de pression (39) qui peut être poussée contre une nervure annulaire (31) de la cosse de contact (24).

21. Installation selon l'une des revendications 18 à 20,
**caractérisée en ce que**
le côté frontal (36) opposé au collet (38) du capuchon fileté (34) est en contact avec une surface de délimitation (37) du boîtier de liaison (12).

22. Installation selon l'une des revendications 18 à 21,
**caractérisée en ce que**
le capuchon de boîtier (15) et/ou le capuchon fileté (34) du coupleur tubulaire (1) comporte à l'extérieur au moins une poignée encastrée (40).
